# EUROPÄISCHE PATENTSCHRIFT

(11) **EP 1 533 083 B1**
(45) Veröffentlichungstag und Bekanntmachung des Hinweises auf die Patenterteilung: **05.03.2008**
(21) Anmeldenummer: 04024898.1
(22) Anmeldetag: 20.10.2004
(51) Int. Cl.: B25D 16/00

(54) **Selektordrehschalter**
Rotary selector switch
Commutateur rotatif de sélection

(30) Priorität: 24.11.2003 DE 10355107
(43) Veröffentlichungstag der Anmeldung: 25.05.2005
(73) Patentinhaber: ITW Befestigungssysteme GmbH, 91522 Ansbach (DE)
(72) Erfinder: Biersack, Horst, 91623 Sachsen (DE)
(74) Vertreter: Blaumeier, Jörg

(56) Entgegenhaltungen:
- EP-A- 0 836 902
- EP-A- 1 166 969
- DE-A1- 3 618 024
- DE-A1- 4 441 793
- DE-C- 808 076
- US-A- 3 393 782

## Beschreibung

Die Erfindung bezieht sich auf einen Selektordrehschalter zum Auswählen der verschiedenen Betriebsfunktionen (Bohren-Zwischenstellung-Meißeln) bei einem handgeführten Elektrowerkzeug mit einem zur Auswahl der Betriebsfunktionen dienenden axial verschiebbaren Schaltrohr mit Stirnprofilen zum Eingreifen in entsprechende Gegenprofile und mit einer umlaufenden Nut, in die ein vom Drehschalter in einer zur Längsachse des Werkzeugs parallel verlaufenden Ebene, um die quer zu dieser Längsachse verlaufende Schalterachse verdrehbarer Schaltnocken eingreift, wobei der Schaltnocken in seiner Bewegungsbahn beidseits gegen eine Federkraft beweglich verschwenkbar am Drehschalter gelagert ist. Die Profile können beispielsweise Stirnräder sein. Ein solcher Selektordrehschalter ist aus US-A-3 393 782 bekannt.

Bei der Betätigung eines solchen Selektordrehschalters ergibt sich das Problem, dass die Zähne der Stirnprofile des Schaltrohrs denen der Gegenprofile gegenüber stehen können und somit nicht in die Eingriffsstellung gelangen können, sodass das Umschalten von der Nutstellung in die Position Meißeln oder in die Position Bohren in einem solchen Fall nicht möglich ist. Der Benutzer ist dann gezwungen durch Drehen am Werkzeug bei gleichzeitigem mehrmaligem Betätigen des Selektordrehschalters zu erreichen, dass das jeweilige Stirnprofil in das entsprechende Gegenprofil eingreifen kann. Dies ist mühsam und umständlich.

Der Erfindung liegt daher die Aufgabe zugrunde, einen Selektordrehschalter der eingangs genannten Art so auszugestalten, dass in jedem Fall eine Vorauswahl der gewünschten Betriebsfunktion durch Verdrehen des Schalters möglich ist, derart, dass sofort dann wenn die Zähne des Stirnprofils und des Gegenprofils ineinandergreifen können, die entsprechende Axialverschiebung durchgeführt und damit die Betriebsfunktion eingestellt wird.

Zur Lösung dieser Aufgabe ist erfindungsgemäß vorgesehen, dass der Schaltnocken am Ende eines zur Schalterachse parallelen Schaltstifts angeordnet ist, der um seinen mit dem Drehschalter drehfest verbundenen Fußpunkt gegen eine Vorspannfeder verschwenkbar angelenkt ist.

Durch die erfindungsgemäße Ausbildung kann der Schaltnocken bei einer Betätigung des Selektordrehschalters in einer Position, in der das Stirnprofil nicht in das Gegenprofil eingreifen kann, in der also die entsprechende Verschiebung des Schaltrohrs nicht möglich ist, beim Drehen des Selektordrehschalters gegen die Vorspannfeder ausweichen, wodurch das Schaltrohr mit der entsprechenden Federkraft der Rückstellfeder des Schaltnockens in die Kupplungsstellung vorgespannt ist. Sobald die Zähne aus ihrer übereinanderstehenden Position gelangen, sodass die Profile ineinander eingreifen können, wird durch diese Federkraft schlagartig die Verschiebung des Schaltrohrs und die Verkupplung von Stirnprofil und Gegenprofil bewirkt.

Dabei kommt es ersichtlich nicht darauf an, ob es sich beim Stirnprofil und Gegenprofil um ineinandergreifende Kegelräder oder um Zahnräder, von denen das eine eine Innenverzahnung und das andere eine in diese durch axiale Verschiebung eingreifende Außenverzahnung aufweist, oder andere Profile handelt. Entscheidend ist nur, dass es sich um ineinandergreifende Profile handelt, bei denen immer die Gefahr besteht, dass bei entsprechendem Versatz die Zähne übereinander stehen und damit die Verkupplung nicht stattfinden kann.

Erfindungsgemäß ist dabei vorgesehen, dass der Schaltnocken am Ende eines zur Schalterachse parallelen Schaltstifts angeordnet ist, der um seinen mit dem Drehschalter drehfest verbundenen Fußpunkt gegen eine Vorspannfeder verschwenkbar angelenkt ist.

Dabei ergibt sich eine Art taumelnder Bewegung des Schaltstifts mit dem an seinem freien Ende angeordneten Schaltnocken, der aus diesem Grund bevorzugt einen balligen Ringabschnitt zum Eingreifen in die umlaufende Nut des Schaltrohrs aufweisen kann.

Zur Erzielung dieser taumelnden Verschwenkbarkeit des Schaltstifts kann in Ausgestaltung der Erfindung vorgesehen sein, dass der Schaltstift starr an einer drehfest im Schaltergehäuse auf einander gegenüberliegenden Lagerstegen abgestützten Taumelplatte mittig zwischen den Auflagestellen, exzentrisch befestigt ist, die von oben von einer Druckfeder beaufschlagt wahlweise um die Lagerzapfen verkippbar ist.

Zur drehfesten Verbindung kann dabei in sehr einfacher Weise vorgesehen sein, dass die Taumelplatte mit einander gegenüberliegenden Schlitzen versehen ist, in die Führungsstege an der Innenwand des Schaltergehäuses eingreifen, die von zwei Lagerstegen flankiert sind.

Durch diese einfache Ausbildung einer Taumelplatte wird beim Verdrehen des Selektordrehschalters in einer blockierten Position der Auswahlstirnprofile für die Betriebsfunktion, in der ja das Schaltrohr axial blockiert ist und deshalb der Schaltnocken der in Achsrichtung liegenden Komponente der Drehbewegung des Selektordrehschalters nicht folgen kann sondern in der umlaufenden Nut des Schaltrohrs festgehalten wird, die Taumelplatte durch den Schaltstift so ausgelenkt, dass sie am einen Lagerende gegen die Wirkung der Druckfeder abhebt. Sobald die Zahnprofile des Funktionsauswahlgetriebes ineinandergreifen können, sorgt diese Druckfeder für die Rückführung der Taumelplatte in ihre Ausgangsposition und damit die Verschiebung des Schaltrohrs in die vorausgewählte Stellung.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine perspektivische Teilansicht eines handgeführten Elektrowerkzeugs mit den wesentlichen Getriebeteilen für die Betriebsfunktionen Bohren und Meißeln und eine erfindungsgemäßen Selektordrehschalter, der das Umschalten zwischen diesen Betriebsfunktionen ermöglicht,

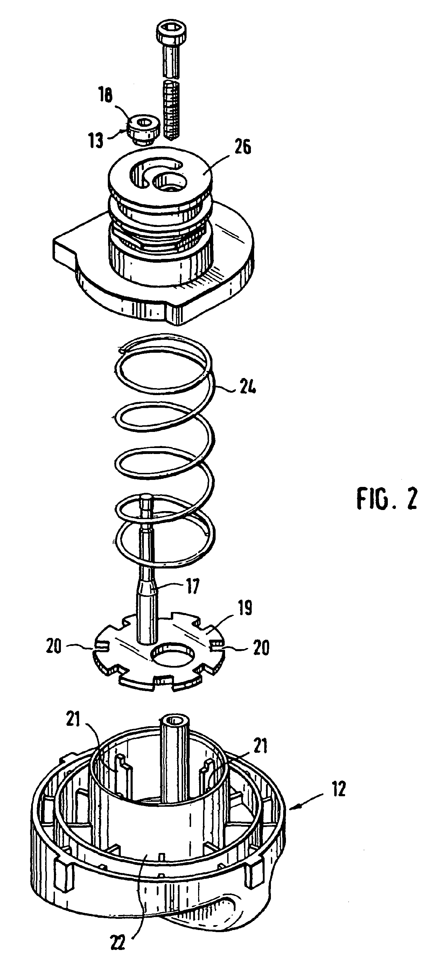

- Fig. 2: eine perspektivische Explosionsdarstellung der Bauteile des Selektordrehschalters,

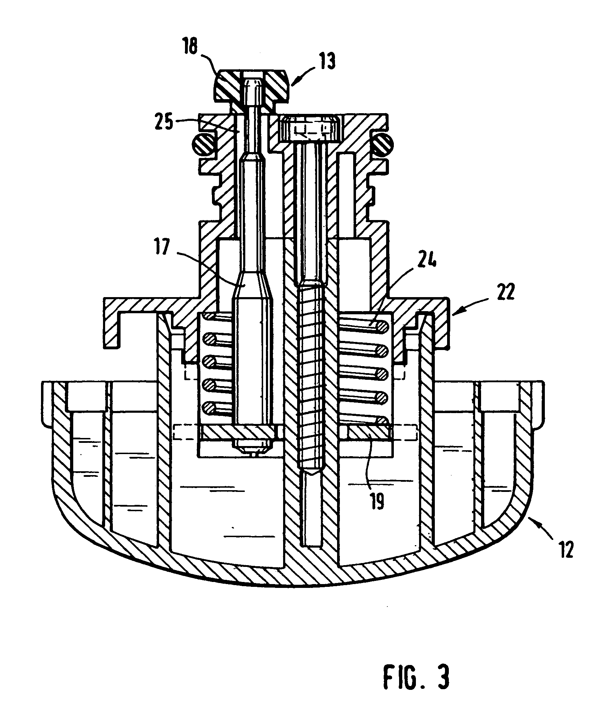

- Fig. 3: einen vergrößerten Schnitt durch den Selektordrehschalter,
- Fig. 4: einen Teilschnitt zur Verdeutlichung der Taumel- und Verkippmöglichkeit des Schaltstifts und
- Fig. 5: eine vergrößerte Draufsicht auf die Stirnseite des Selektordrehschalters mit dem herausstehenden Schaltnocken.

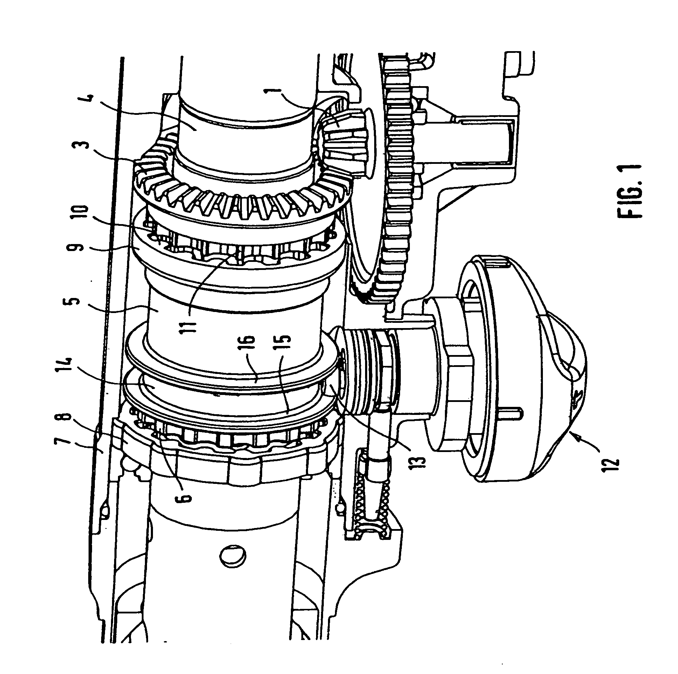

In Fig. 1 erkennt man bei 1 das Abtriebskegelrad des Motorgetriebes eines Elektrowerkzeuges, das mit dem Kegelrad 3 in Eingriff steht, das wiederum frei drehbar auf dem Zylinder 4 gelagert ist, der am vorderen, also in der Fig. 1 linken, Ende mit einem Bohrer verbunden ist. Auf dem Zylinder 4 ist mithilfe von axialen Nuten und Rippen ein Schaltrohr 5 drehfest aber axial verschiebbar gelagert, das am vorderen Ende mit einem Stirnrad 6 mit Außenverzahnung versehen ist, welches bei entsprechender Axialverschiebung in die Innenverzahnung eines Gegenzahnrads nämlich des starr im Gehäuse 7 gelagerten Schaltrings 8 eingreifen kann. An anderen Ende trägt das Schaltrohr 5 ein Stirnrad 9 mit Innenverzahnung 10, in die die Außenverzahnung eines Gegenzahnrads 11 eingreifen kann, das fest mit dem Kegelrad 3 verbunden ist.

Wird über den Selektordrehschalter 12 mit einem exzentrischen Schaltnocken 13, der in eine Ringnut 14 zwischen zwei festen Ringen 15 und 16 des Schaltrohrs eingreift, dieses Schaltrohr nach rechts verschoben, so erfolgt über die verkuppelten Zahnräder 9 und 11 eine drehfeste Verbindung des Kegelrads 3 über das Schaltrohr 5 mit dem drehfest damit verbundenen Zylinder 4, sodass das Motorgetriebe eine Drehverbindung mit dem Zylinder und damit mit dem Bohrer aufweist. Es handelt sich also hier um die Betriebsfunktion Bohren.

Wird umgekehrt das Schaltrohr 5 mithilfe des um 90° - über die Aus-Stellung hinaus - in die entgegengesetzte Richtung verdrehten Selektordrehschalters 12 nach links verschoben, so kuppelt das Stirnrad 6 mit dem im Gehäuse fest gelagerten Schaltring 8. Das Schaltrohr 5 ist dadurch in Drehrichtung blockiert, sodass in dieser Position nur ein Meißeln stattfinden kann.

Erfindungsgemäß ist der Selektordrehschalter 12 so ausgebildet, dass eine Vorauswahl der Funktionen Bohren bzw. Meißeln auch dann möglich ist, wenn die hierfür eigentlich notwendige Verschiebung des Schaltrohr 5 durch Aufeinanderstehen der Zähne der jeweils ineinandergreifenden Stirnräder blockiert ist.

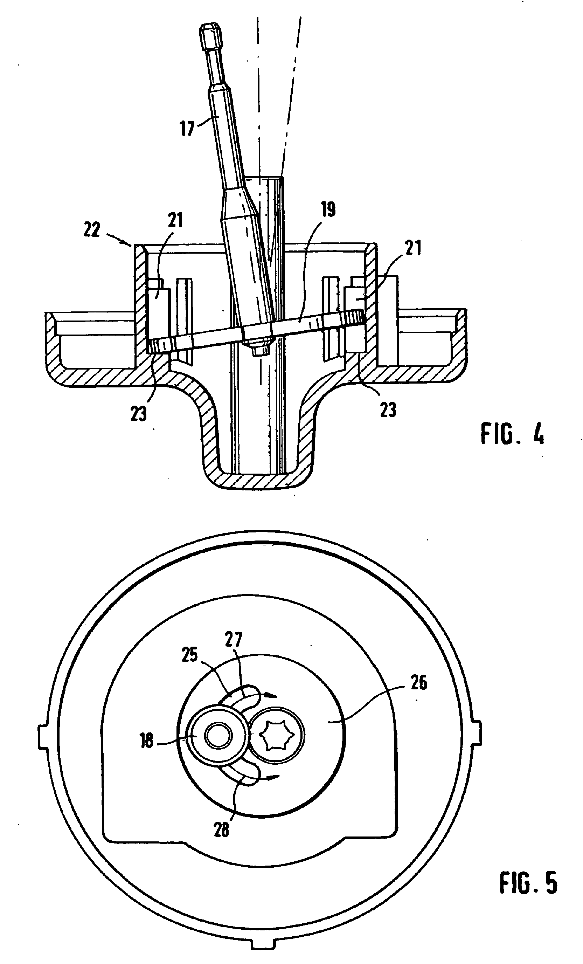

Zu diesem Zweck ist im Schaltergehäuse eine einen exzentrischen Schaltstift 17 mit einem an dessen Ende aufgesteckten balligen Schaltnocken 13 tragende Taumelplatte 19 drehfest gelagert, wobei die drehfeste Lagerung dadurch erzielt wird, dass die Taumelplatte mit wenigstens zwei einander gegenüberliegenden Schlitzen 20 versehen ist (in dargestellten Ausführungsbeispiel sind mehrere Schlitzpaare vorgesehen) in die zwei einander gegenüberstehende Führungsstege 21 an der Innenwand des Schaltergehäuses 22 eingreifen. Diese Führungsstege 21 werden beidseits von Lagerstegen 23 flankiert, auf denen die Taumelplatte 19 aufliegt, wobei der Schaltstift 17 mit dem Schaltnocken exzentrisch auf der Taumelplatte in der Mittelebene zwischen den Auflagern angeordnet ist. Die Taumelplatte 19 ist durch eine Wendeldruckfeder 24 nach unten verspannt und so an die Auflagerstege 23 angedrückt. Erfolgt eine Verdrehung des Schalters 12 wenn die Verschiebung des Schaltrohrs durch übereinanderstehende Zähne der Funktionsauswahl Zahnräder blockiert ist, so wird durch den damit in der Nut 14 festgehaltenen balligen Ringabschnitt 18 des Schaltnockens 13 der Schaltstift 17 verschwenkt derart, dass die Taumelplatte 19 auf einem der Lager 23 abhebt, wie dies in Fig. 4 angedeutet ist. Der Schaltstift bewegt sich dabei in einer Art Taumelbewegung mit seinem freien Ende innerhalb eines Kurvenschlitzes 25 einer Stirnplatte 26 des Schaltergehäuses 22. Sobald die Blockierung des Schaltrohrs durch eine veränderte Position der Funktionsauswahlzahnräder 6, 8 bzw. 9, 11 aufgehoben ist, wird durch die Spannung der Druckfeder 24 der Schaltstift mit dem Schaltnocken aus seiner verkippten Stellung in die Ausgangsposition zurückbewegt und verschiebt dabei axial das Schaltrohr zur Erzielung der gewünschten Funktionauswahlverkupplung.

Die Erfindung ist nicht auf das dargestellte Ausführungsbeispiel beschränkt. Für die Funktionsweise des erfindungsgemäßen Selektordrehschalters mit Funktionsvorauswahl ist es erforderlich, dass der Schaltnocken 13 aus seiner Position in Richtung der in Fig. 5 eingezeichneten Pfeile 27 bzw. 28 gegen die Wirkung einer Feder ausgelenkt werden kann, wobei die Stärke der Feder maßgebend ist für die Einrückkraft mit der bei der bereits beschriebenen Vorauswahl bei blockiertem Schaltrohr die Schaltrohrverschiebung und damit die Verkupplung der Auswahlzahnräder für die verschiedenen Betriebsfunktionen erfolgt, sobald die Zähnungen wieder ineinander eingreifen können.

## Patentansprüche

1. Selektordrehschalter zum Auswählen der verschiedenen Betriebsfunktionen (Bohren-Zwischenstellung-Meißeln) bei einem handgeführten Elektrowerkzeug mit einem zur Auswahl der Betriebsfunktionen dienenden axial verschiebbaren Schaltrohr (5) mit Stirnprofilen zum Eingreifen in entsprechende Gegenprofile und mit einer umlaufenden Nut (14), in die ein, vom Drehschalter (12) in einer zur Längsachse des Werkzeugs parallel verlaufenden Ebene, um die quer zu dieser Längsachse verlaufende Schalterachse verdrehbarer, Schaltnocken (13) eingreift, wobei der Schaltnocken (13) in seiner Bewegungsbahn beidseits gegen eine Federkraft beweglich verschwenkbar am Drehschalter (12) gelagert ist, **dadurch gekennzeichnet, dass** der Schaltnocken (13) am Ende eines zur Schalterachse parallelen Schaltstifts (17) angeordnet ist, der um seinen mit dem Drehschalter drehfest verbundenen Fußpunkt gegen eine Vorspannfeder verschwenkbar angelenkt ist.

2. Selektordrehschalter nach Anspruch 1, **dadurch gekennzeichnet, dass** der Schaltstift (17) eine Stirnplatte (26) des Drehschalters (12) durchsetzend in einem Kurvenschlitz (25) geführt ist.

3. Selektordrehschalter nach einem der Ansprüche 1 oder 2, **dadurch gekennzeichnet, dass** der Schaltstift (17) starr an einer drehfest im Schaltergehäuse (22) auf einander gegenüberliegenden Lagerstegen (23) abgestützten Taumelplatte (19) mittig zwischen den Auflagerstellen, exzentrisch befestigt ist, die von oben von einer Druckfeder (24) beaufschlagt wahlweise um die Lagerstege (23) verkippbar ist.

4. Selektordrehschalter nach Anspruch 3, **dadurch gekennzeichnet, dass** die Taumelplatte (19) mit einander gegenüberliegenden Schlitzen (20) versehen ist, in die Führungsstege (21) an der Innenwand des Schaltergehäuses (22) eingreifen, die von zwei Lagerstegen (23) flankiert sind.

5. Selektordrehschalter nach einem der Ansprüche 1 bis 4, **dadurch gekennzeichnet, dass** der Schaltnocken (13) einen balligen Ringabschnitt (18) zum Eingreifen in die umlaufende Nut (14) des Schaltrohrs (5) besitzt.

## Claims

1. Rotary selector switch for selecting the various operating functions (drilling/intermediate position/chiselling) in a portable electric tool comprising an axially displaceable control tube (5) serving to select the operating functions and having end profiles for engaging in corresponding mating profiles and having a circumferential groove (14) in which a control cam (13) engages, which can be rotated by the rotary switch (12) about the switch axis in a plane running parallel to the longitudinal axis of the tool, said switch axis running transversely to said longitudinal axis, the control cam (13) being mounted on the rotary switch (12) in such a way as to be pivotable in its path of movement on both sides against a spring force, **characterized in that** the control cam (13) is arranged on the end of a control pin (17) which is parallel to the switch axis and is coupled in such a way as to be pivotable against a preloading spring about its foot point connected to the rotary switch in a rotationally fixed manner.

2. Rotary selector switch according to Claim 1, **characterized in that** the control pin (17) is guided in a curved slot (25) in such a way as to pass through an end plate (26) of the rotary switch (12).

3. Rotary selector switch according to either of Claims 1 and 2, **characterized in that** the control pin (17) is rigidly fastened eccentrically, centrally between the support points, to a wobble plate (19) which is supported in a rotationally fixed manner in the switch housing (22) on opposite support webs (23) and which, acted on from above by a compression spring (24), can be optionally tilted about the support webs (23).

4. Rotary selector switch according to Claim 3, **characterized in that** the wobble plate (19) is provided with opposite slots (20), in which guide webs (21) on the inner wall of the switch housing (22) engage, said guide webs (21) being flanked by two support webs (23).

5. Rotary selector switch according to one of Claims 1 to 4, **characterized in that** the control cam (13) has a crowned annular section (18) for engaging in the circumferential groove (14) of the control tube (5).

## Revendications

1. Commutateur rotatif de sélection pour sélectionner les différentes fonctions opérationnelles (perçage - position intermédiaire - burinage) d'un outil électroportatif muni d'un tube de commutation (5) coulissant dans le sens axial et servant à sélectionner les fonctions opérationnelles, muni de profilés frontaux destinés à venir en prise dans les profilés homologues correspondants, et muni d'une rainure périphérique (14) dans laquelle une came de commutation (13) vient en prise depuis le commutateur rotatif (12) dans un plan qui s'étend parallèlement à l'axe longitudinal de l'outil, ladite came pouvant tourner autour de l'axe de commutateur s'étendant transversalement à cet axe longitudinal, la came de commutation (13) étant logée sur le commutateur rotatif (12) de manière à pouvoir pivoter dans sa bande de déplacement des deux côtés contre la force d'un ressort, **caractérisé en ce que** la came de commutation (13) est disposée à l'extrémité d'une broche de commutation (17) parallèle à l' axe du commutateur, laquelle est articulée avec son point de base relié sans pouvoir tourner avec le commutateur rotatif de manière à pouvoir pivoter contre un ressort de précontrainte.

2. Commutateur rotatif de sélection selon la revendication 1, **caractérisé en ce que** la broche de commutation (17) d'une plaque frontale (26) du commutateur rotatif (12) est guidée de manière forcée dans une fente courbe (25).

3. Commutateur rotatif de sélection selon l'une des revendications 1 ou 2, **caractérisé en ce que** la broche de commutation (17) est fixée de manière rigide et en excentricité au milieu entre les points d'appui à une plaque oscillante (19) soutenue sans pouvoir tourner dans le boîtier du commutateur sur des montants d'appui (23) opposés l'un à l'autre, laquelle peut pivoter au choix autour des montants d'appui (23) en étant soumise par le haut à un ressort de compression (24).

4. Commutateur rotatif de sélection selon la revendication 3, **caractérisé en ce que** la plaque oscillante (19) est munie de fentes (20) opposées l'une à l'autre dans lesquelles pénètrent les montants de guidage (21) sur la paroi intérieure du boîtier de commutateur (22), lesquels s'accompagnent de deux montants d'appui (23).

5. Commutateur rotatif de sélection selon l'une des revendications 1 à 4, **caractérisé en ce que** la came de commutation (13) possède une section annulaire bombée (18) pour venir en prise dans la rainure périphérique (14) du tube de commutation (5).
